# EUROPEAN PATENT APPLICATION

(11) **EP 1 397 004 A1**
(43) Date of publication of application: **10.03.2004**
(21) Application number: 03255307.5
(22) Date of filing: 27.08.2003
(51) Int. Cl.: H04N 7/088

(54) **System and method for the synchronized activation of external devices in association with video programs**

(30) Priority: 29.08.2002 US 407511 P
(71) Applicant: Xcarlet Technologies, Inc., Pequot Lakes, MN 56472 (US)
(72) Inventor: Duff, John F., Pine River, MN 65474 (US); Duff, Kristi J., Pine River, MN 56474 (US)
(74) Representative: Holmes, Matthew Peter

(57) **Abstract**

A device that is external to a television set or other viewing appliance receives data encoded in a television program broadcast signal. The device includes visual or audible indicia that are activated depending upon the data that is received by the device. As a result, the indicia may be activated in synchronization with events that occur during the television program. The device may be a standalone unit or may include a base station that receives the encoded signal and transmits data to a remote unit that features the indicia so that the indicia is activated in a remote fashion.

## Description

### CLAIM OF PRIORITY

This application claims priority from U.S. Provisional Patent Application Serial Number 60/407,511, filed August 29, 2002, currently pending.

### BACKGROUND OF THE INVENTION

This invention relates to the field of video and broadcast television programs. In particular, the present invention provides a system and method for connecting a device that is external to a television set, or other viewing appliance, to a video transmission cable, preferably in physical proximity to the television set, and arranging for the device to be activated at certain times by data embedded in the video stream traveling through the video transmission cable. The activation of the external device may be synchronized with events that occur in the video program.

Television (TV) networks, cable TV companies, satellite network operators, and independent TV program providers offer many different types of entertainment to viewers. One example is the broadcast of sporting events; such as professional hockey. The National Hockey League (NHL) is an organization that stages professional hockey games in the United States and Canada. The NHL contracts for the TV broadcast of its games with broadcasters such as ESPN, ABC, and the CBC (among others).

The revenue derived from NHL broadcast contracts is extremely important to the financial success of the various hockey teams in the NHL. Therefore, the NHL is always striving to increase the TV ratings for its games, a standard industry metric for determining how many people are watching a TV program. The higher the ratings are, the more people are watching, which means that the broadcaster (ESPN, ABC, CBC, etc.) can charge more for the advertising shown during the commercial breaks during the games. If the NHL can increase its ratings, it can then demand more money from ESPN, ABC, CBC, etc., to broadcast the games, because the broadcasters can then turn around and charge higher advertising prices. The NHL distributes the money it receives from the broadcasters to the teams. The more money that teams have at their disposal, the more they can afford to pay their players. So, the TV ratings are vital to the financial success of the NHL, its constituent teams, the hockey players themselves, and the broadcasters. Unfortunately for the NHL, its TV ratings have historically been much lower than the ratings for other professional sports such as American football, basketball, baseball, or auto racing (NASCAR for example).

The NHL situation is just one example of how critical it is for TV content producers, and the TV broadcasters themselves, to constantly think of new ways to increase TV ratings. It stands to reason that making a TV program more enjoyable to watch might increase the number of people who watch it. The present invention is a system and method designed with that purpose in mind: to increase the entertainment value of a TV program by providing for the synchronized activation of an external entertainment device purchased or leased by a TV viewer.

Accordingly, it is an object of the present invention to provide a system and method that increases the entertainment value of a broadcast television programs.

It is another object of the present invention to provide a system and method that complements a wide variety of program types.

It is another object of the present invention to provide a system and method that may provide entertaining visual and/or audio indicia.

It is still another object of the present invention to provide a system and method that provides entertaining indicia in synchronization with broadcast television programs.

### SUMMARY OF THE INVENTION

The present invention consists of a system and method including a device having an indicia, where the device is attached to the same video stream from which a TV program is being received by a television set or other viewing appliance. For example, if the TV program is being received via coaxial cable connected to the TV set, a coaxial cable "splitter" is attached to the cable, resulting in the same video signal being delivered simultaneously to both the TV set and the device of the present invention.

The device contains an electronic circuit component (preferably including a microprocessor) that extracts data from the video signal. This data was encoded by the broadcaster prior to transmission in a portion of the video signal that is not displayed by TV sets, commonly called the "vertical blanking interval", or VBI. The broadcaster inserts the appropriate data in the signal according to how the broadcaster wishes to activate the external device. The behavior or indicia that the device exhibits in response to activation is determined by its manufacturer. The broadcaster learns these behaviors or indicia in advance, and the proper way to activate them, to ensure the data it encodes in the video signal will be compatible with the external device the consumer has purchased or leased and installed. The device is powered by a battery or an electrical cord leading to a wall outlet.

The device of the present invention is not limited to a single, self-contained unit. It may alternatively consist of a wireless "transmitter base station" attached to the video signal, and one or more physically separate wireless receiver units. The base station contains the electronic circuit component (preferably a microprocessor and one or more stored programs) necessary to receive, extract, and interpret the data encoded in the video signal. The base station then transmits information via a wireless signal to one or more wireless receiver units within range. This transmitted information may simply be the unaltered data received and extracted from the video signal or data generated by the base station. The receiver units are separate devices that act upon the data received from the base station, possibly by executing one or more stored programs on an internal microprocessor. Each receiver unit has one or more capabilities that are activated in response to the received signal. The base stations and the receiver units are each powered by a battery or an electrical cord leading to a wall outlet.

The following detailed description of embodiments of the invention, taken in conjunction with the appended claims and accompanying drawings, provide a more complete understanding of the nature and scope of the invention.

### BRIEF DESCRIPTION OF THE DRAWINGS

Figure 1 is a block diagram of an embodiment of the system of the present invention;
Figure 2 is a block diagram of a second embodiment of the system of the present invention;
Figure 3 is a block diagram of a data encoding arrangement suitable for use with the system and method of the present invention;
Figure 4 is a diagram representing data transmitted in accordance with the system and method of the present invention;
Figure 5 is a block diagram of the architecture of the external standalone device of Figure 1;
Figure 6 illustrates an embodiment of the control knobs or switches of the standalone device of Figure 5;
Figure 7 is a flow chart of the processing performed by the CPU of Figure 5;
Figure 8 is a block diagram of the architecture of the transmitter base station or Figure 2;
Figure 9 is a block diagram of the architecture of the wireless receiver unit of Figure 2.

### DESCRIPTION OF THE PREFERRED EMBODIMENTS

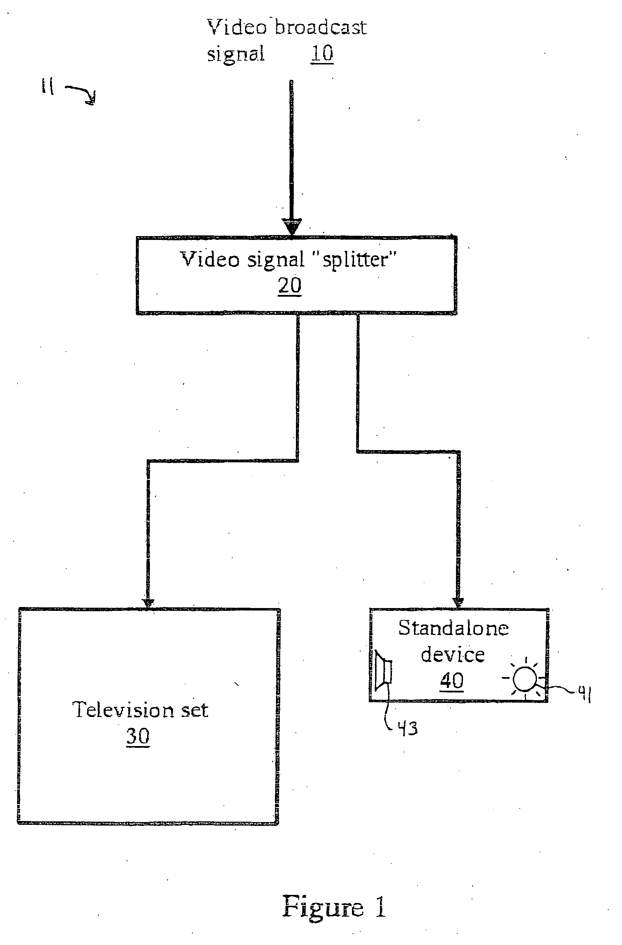

An embodiment of the system of the present invention is indicated in general at **11** in Figure 1. A broadcast or video input signal **10** of a video/broadcast program received by the system of the present invention encounters a video signal splitter **20** so that both a television set **30** and an external standalone device **40** receive it. A consumer purchases or leases the device **40** which, as explained in greater detail below, contains an electronic circuit (preferably including a microprocessor and one or more stored programs) that receives and interprets data encoded in the video signal **10.** The video broadcast signal may be from a variety of sources including, but not limited to; cable, satellite or standard television broadcast systems.

Device **40** may be constructed with a variety of audio and/or visual indicias. The audio and/or visual indicias may be customized so that the device **40** is particularly suited for a specific application. An example of such an application is use in connection with televised National Hockey League (NHL) games.

In an NHL hockey game, at the sports arena where the game is being played, there are two persons called "goal judges". A goal judge sits in a Plexiglas box directly behind each goal, on either end of the playing field (the ice surface). It is the goal judge's responsibility to carefully watch the goal directly in front of him to see if the puck crosses the goal line, which results in a goal for the attacking team. If the goal judge does see the puck cross the goal line, he pushes a button or lever that activates a rotating red light attached to the top of the box he sits in. The red light is supposed to indicate to everyone in the arena (including the referees) that a goal has been scored. The referee (not the goal judge) has the final responsibility and authority to determine if a goal has been scored, but the goal judge is rarely wrong. The concept of the goal judge and the red light was invented because the puck is small and hard to see, and it helps the fans in the arena and also the referees to immediately know when a goal has been scored.

Also, when the "home" team scores in an NHL hockey game, a loud horn or some other sound effect is usually activated in addition to the red light. This acts as a celebratory auditory signal to the crowd that a goal was scored by "their" team. When the "visiting" team scores, the red light is activated by the goal judge, but the horn or other sound effect is normally not activated (the crowd normally wouldn't want to celebrate a score by the visiting team).

The external standalone device **40** (Figure 1) that is particularly suited for use with NHL hockey broadcasts includes an indicia such as a rotating red light **41** similar to that found above the goal judge's box in a hockey arena. The device preferably also contains audio speakers **43** so that audio indicia may be provided.

In accordance with the present invention, the TV broadcaster of a hockey game inserts data into the broadcast signal immediately upon the goal judge pressing his button to indicate a goal. This arrangement is accomplished by the broadcaster connecting the button the goal judge presses to an encoder/computer that detects the button being pressed and immediately inserts the appropriate data into the video signal. This data is received by the external standalone device **40** of Figure 1. As will be explained in greater detail below, the device decodes or extracts the data from the video broadcast signal (**10** in Figure 1) and interprets the data. If the data indicates that a goal has been scored, the red light indicia **41** of the device is activated. Additionally, the speakers in the device play the sound of a horn, buzzer, short song, or other auditory effect through speaker(s) **43.** As a result, a hockey fan watching the game on his or her TV set, with the device **40** sitting nearby, observes the illumination of the red light, and possibly the sounding of the horn, of the device **40** at approximately the same time that the goal judge's red light is activated in the hockey arena. This enhances the viewing pleasure of the hockey fan by creating more of a "live" experience and an increased sense of participation in the game.

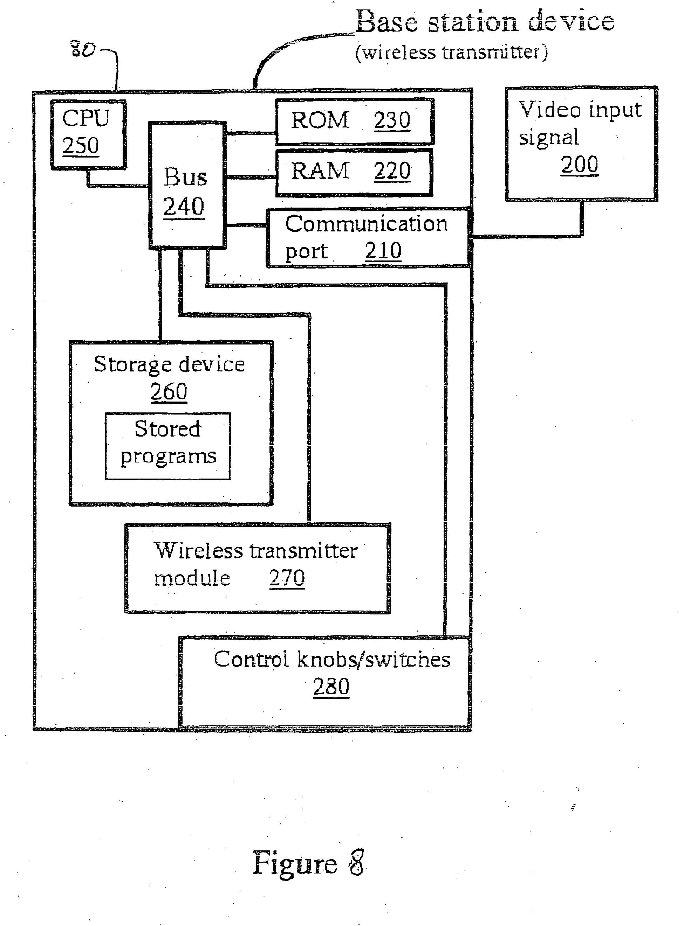

The data encoded in the video signal **10** of Figure 1 indicates the identity of the team that scored, or more generally if the "home" or "visiting" team has scored. Accordingly, the device **40** has the capability of allowing the consumer to select when the light and speakers are activated, that is, depending on whether a particular team has scored. The activation of the light and speakers may be set in any combination. For example: the consumer may choose to have the light and speakers activated when his or her favorite team scores, but just the light activated (and not the speakers) when the other team scores. Or perhaps the consumer does not want the light or the speakers activated when any team except his favorite team scores. The device allows the consumer to choose between these options via external knobs or switches on the device, illustrated at 180 in Figures and 6 and 280 in Figure 8.

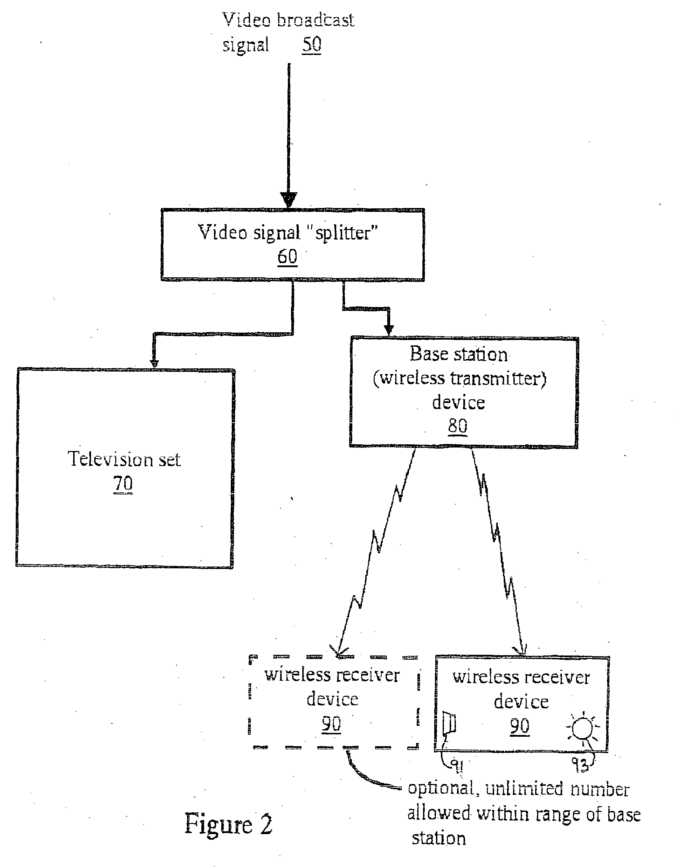

As illustrated in Figure 2, an alternative embodiment of the system of the present invention includes a transmitter base station **80** plus one or more wireless receiver units **90** in place of the external standalone device **40** of Figure 1. In other words, the external device may be a transmitter base station plus one or more wireless receiver units. A consumer purchases or leases the base station and installs it so that it shares the same video signal **50** as his TV set **70.** More specifically, the video signal **50** is split with a video signal splitter **60** so that both the TV set and the base station receive it. The consumer also purchases or leases at least one compatible wireless receiver unit **90.**

The wireless receiver unit **90** may be implemented in a variety of novel fashions such as a stuffed animal containing the wireless receiver unit. The stuffed animal would presumably have one or more extra features such as the ability to move (via internal motors), or the ability to speak or play songs (via internal electronic circuitry and speakers). As a result, the owners of a popular children's television show containing a variety of characters, for example, may license and sell "stuffed animals" corresponding to the characters in the TV show, to capitalize on their popularity.

The producers of the children's TV program embed data in the video signal with the intention of activating the extra features (moving, speaking, playing songs, etc.) of the stuffed animals at appropriate times during the TV program. The base station **80** receives the data, and then transmits either the unaltered data to each wireless receiver unit **90** (contained in each stuffed animal), or the base station decodes and interprets the data to execute a stored program (stored in the base station) that sends different data to each wireless receiver device within range of the base station.

As will be explained in greater detail below, the wireless receiver unit **90** contains an electronic circuit (preferably including a microprocessor) capable of receiving the data and subsequently executing one or more stored programs (stored in the wireless receiver device) that activate one of the stuffed animal's "extra features". For example, If the stuffed animal has the ability to play songs, the TV producers may encode data in the video signal directing the system to activate the playing of a song. As a result, a child watching the characters on the TV show singing a song may be holding the stuffed animal (containing the wireless receiver unit **90**) with the stuffed animal "singing" the same song in tandem with the characters on the TV show. That is, the singing is simulated by the stuffed animal playing the song through its internal speakers (**91** in Figure 2) in response to data received from the base station.

Another version of the system of Figure 2 would be similar to the previously described hockey red light device. A consumer purchases or leases and installs the base station **80** in such a way as to share the video signal **50** as described previously, and then purchases one or more wireless receiver units **90**, each featuring a rotating red light **93** serving as indicia. When a goal is scored during a hockey game, as described with regard to Figure 1, the broadcaster ensures that the appropriate data is simultaneously inserted into the video signal. The base station **80** receives this data and sends a wireless signal to all of the red light units **90** (each containing a wireless receiver) within range directing them to turn themselves on for a certain amount of time.

This embodiment of Figure 2 and the previous paragraph thus affords the consumer more flexibility in terms of where the red light may be physically placed as only the base station has to be attached to the cable carrying the video signal. Also, if the consumer wished to have several of these lights activated simultaneously to indicate a goal was scored, the consumer would need to only purchase a single base station, and then as many separate red light (wireless receiver) devices as he or she wished. These red light (wireless receiver) devices might also have internal speakers **91,** and allow the consumer to choose when the light and speakers are activated as previously described.

The preferred embodiments described above require inserting and extracting data into and out of a broadcast stream. The following method of encoding/decoding data into/out of an analog broadcast stream may be used with the present invention. To understand these processes, however, some background information is required.

An analog TV set "paints" the screen about sixty times per second, drawing horizontal lines on the screen starting from the upper left-hand corner. The analog TV broadcast signal contains the necessary information to control this drawing of the lines to re-create each frame in the video stream. Each horizontal line is drawn from left-to-right, and when the last line of a frame is drawn on the screen, the internal mechanism in the TV set repositions itself from the bottom right-hand corner of the screen to the top left-hand corner, to get ready to start drawing the next frame. This repositioning takes a certain (small) amount of time, during which drawing on the screen is disabled. This is usually referred to as the vertical blanking interval (VBI). Therefore, any information inserted into the broadcast signal during these vertical blanking intervals is not used to re-create the video on the TV screen. It is standard industry practice to use the VBI to transmit extra data that is separate from the audio and video information. Some examples of extra data are the closed-captioning information for the hearing-impaired, television schedule information, and teletext service information. This data can then be extracted (decoded) by set-top boxes in consumers' homes, and used appropriately. The data has no impact on the quality of the video of the TV program.

For digital television broadcast systems (ie, HDTV), where the concept of the VBI does not apply, there are other industry-standard methods of inserting user-defined data into the digital broadcast stream. Digital TV (such as HDTV, DSS satellite T V, DVD) consists of a packetized data stream. There are at least two similar standards for the encoding of digital TV (these specify the contents and order of the packets), and both of these standards are derived from the MPEG-2 international video/audio encoding standard. These two standards are ATSC (Advanced Television Systems Committee), and DVB (Digital Video Broadcast). Each standard specifies how user data (including data that formerly was inserted into the VBI for analog transmission) is to be encoded into the proper packets in the video stream, and of course each standard differs slightly from each other. The present invention may use the appropriate standard-specified method of encoding data into the digital broadcast stream, depending on which standard for encoding and transmitting the digital TV signal (ATSC, DVB, etc.) is being used to deliver the signal into the consumer's home.

Another industry-standard technique used to transmit user (VBI) data in analog or digital broadcast signals is to encode the data into the first few lines or last few lines of the.active picture region, to avoid being accidentally deleted by cable TV providers or digital TV satellite providers. This poses no problems for the vast majority of TV sets because of how they are manufactured (the overscan of the TV masks the first few lines). Among others, the Nielsen Media Research corporation that produces TV ratings uses this technique. The present invention may use this technique if necessary to ensure the data reaches the consumer. For the insertion/encoding and extraction/decoding of the data used by the present invention, companies such as Norpak Corporation (located in Canada) produce the necessary circuit boards and microprocessors.

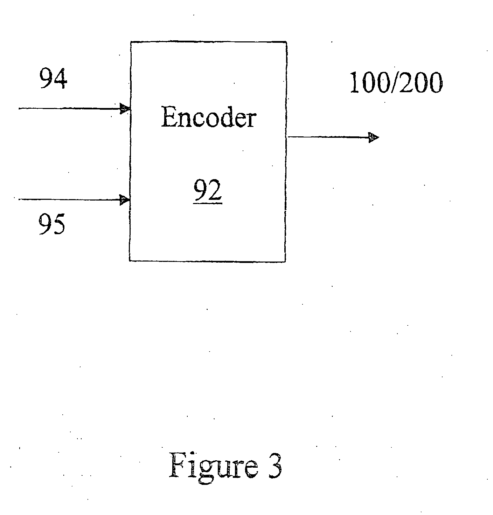

With reference to Figure 3, the insertion of data into the broadcast stream is accomplished by the broadcaster via an encoder, indicated at **92**. As is known in the art, the encoder **92** may be a computer running a software program designed to take as input an analog or digital TV broadcast stream **94** and also the data **95** to be encoded into the stream. For an analog TV broadcast stream, the encoder **92** encodes the data as VBI data in the signal, optionally using the first few lines or last few lines of the active picture region to do so. For a digital TV broadcast stream, the encoder **92** encodes the data either in the first few lines or last few lines of the active picture region. The encoder may alternatively encode the data in the user-defined data portion of the digital signal according to industry standards.

The data inserted into either an analog or digital TV broadcast stream is encoded in accordance with industry standards to guarantee non-interference with existing devices, to ensure that only the system of the present invention (on the receiving end) recognizes, extracts and decodes the data Therefore, the data is ignored by all other electronic devices, and only utilized by the system of the present invention.

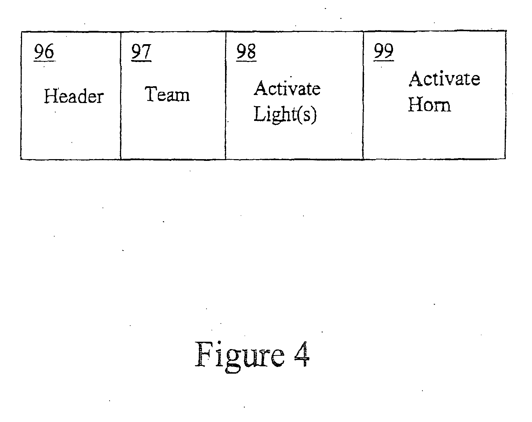

An example of the data **95** encoded into the video broadcast signal of an NHL hockey game in accordance with the present invention is illustrated in Figure 4. A "Header" field **96** designates the beginning of the data that is to be used by the system of the present invention. A "Team" field **97** follows the header field and identifies the NHL hockey team that scored a goal. The team may be identified in a variety of ways such as by team name or as the "home" or "visiting" team. An "Activate Light(s)" field 98 and ''Activate Horn'' field **99** follows the "Team" field **97.** The use of these fields by the system of the present invention is explained below.

Device **40** and base station **80** of Figures 1 and 2 contain electronics, preferably including one or more microprocessors, that recognize, extract, and decode the data from the incoming analog or digital TV signal in accordance with how the data was initially encoded into the signal. The exact procedure of extracting and utilizing the data on the receiving end depends on the particular preferred embodiment.

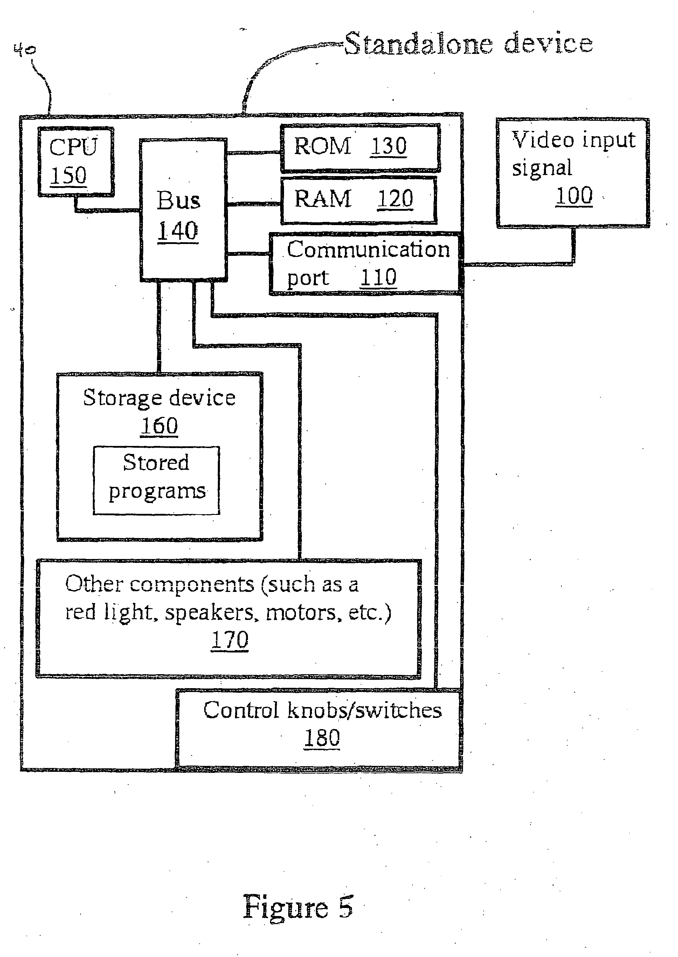

Figure 5 is a detailed diagram of the external standalone device **40** of Figure 1. The broadcast or video input signal **100** is connected to the communication port **110** on the device, for example using a standard TV coaxial cable. The communication port communicates via bus **140** with a random-access-memory (RAM) **120**, read-only-memory (ROM) **130,** central processing unit (CPU) **150** and a storage device **160.** RAM **120** allows for the temporary storage of instructions or data by the CPU. ROM **130** and storage device **160** contain instructions for the CPU to follow. Indicia **170** also communicates with the CPU by bus **140**.

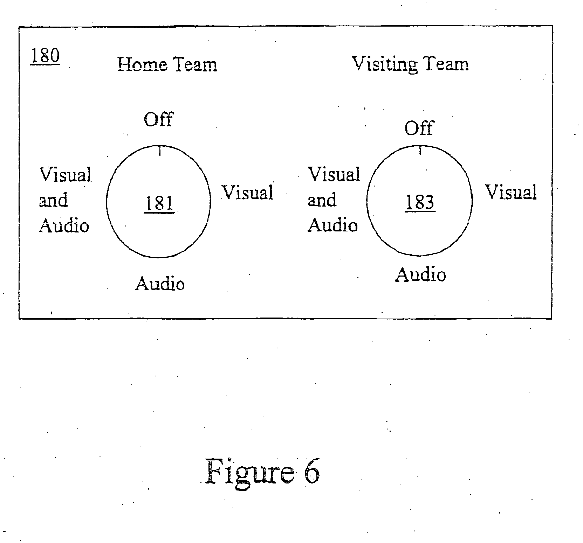

An example of the control knobs or switches **180** of the device **40** of Figure 5 is presented in Figure 6. A "Home Team" knob **181** may be set so that when the home team scores; nothing happens (the "Off' setting), a light illuminates only (the "Visual" setting), a horn sounds only (the "Audio" setting) or both a light illuminates and a horn sounds (the "Visual and Audio" setting). "Visiting Team" switch or knob **183** permits the same options with regard to a visiting team goal.

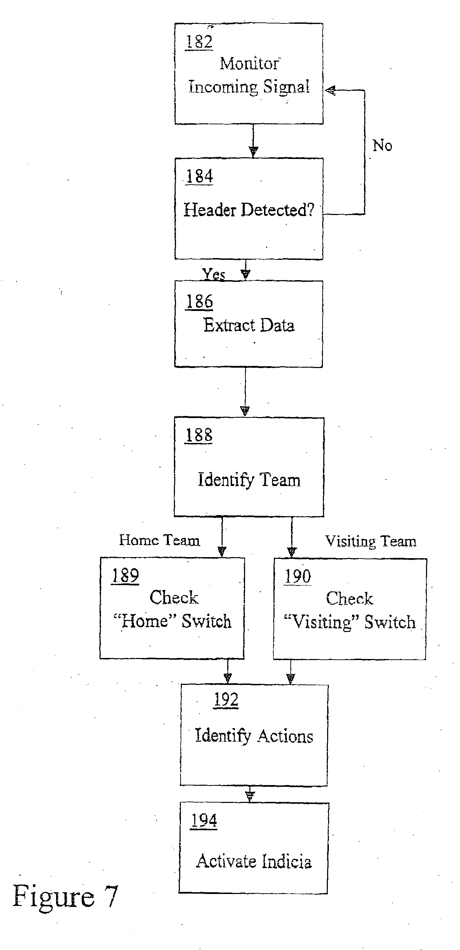

The programs stored in storage device **160** of Figure 5 direct CPU **150** to perform the processing illustrated in Figure 7. As illustrated at **182** in Figure 7, CPU **150** monitors the communication port, constantly looking for any data beginning with the header **96** of Figure 4. As indicated at **184** and **186**, when the header is detected, the data is extracted by the CPU. As indicated at **188,** the CPU then determines the identity of the team who scored a goal (for example, "home" or "visiting") by reading field **97** of Figure 4. The CPU then checks the settings of switches **180** (Figures 5 and 6), as indicated at **189** or **190** in Figure 7, depending on which team scored a goal, and reads the actions encoded in the data (fields **98** and **99** of Figure 4), as indicated at **192** in Figure 7. As a result, as indicated at **194** in Figure 7, the appropriate indicia (**170** in Figure 5) are activated.

The data illustrated in Figure 4, the switches illustrated in Figure 6 and the processing illustrated in Figure 7 are examples only. Variations from these illustrations may be made in the system and method of the present invention. For example, in a simplified version of the system, the encoded data received by the device **40** may only include the team identity. That is, fields **98** and **99** may be omitted from Figure 4. In such an arrangement, the CPU **150** of Figure 5 would simply identify the team as "home" or "visiting" and activate the light or horn per the setting of switches **180** of Figures 5 and 6. Alternatively, when the fields **98** and **99** of Figure 4 are included in the encoded data, the switches **181** and **183** of Figure 6 each may have only an "on" and ''off'' setting so that the actions indicated in fields **98** and **99** are performed only when the switches are set to "on". The system and method of the present invention thus offers a great deal of flexibility in terms of the data that is encoded and transmitted and the construction of the device that receives the data.

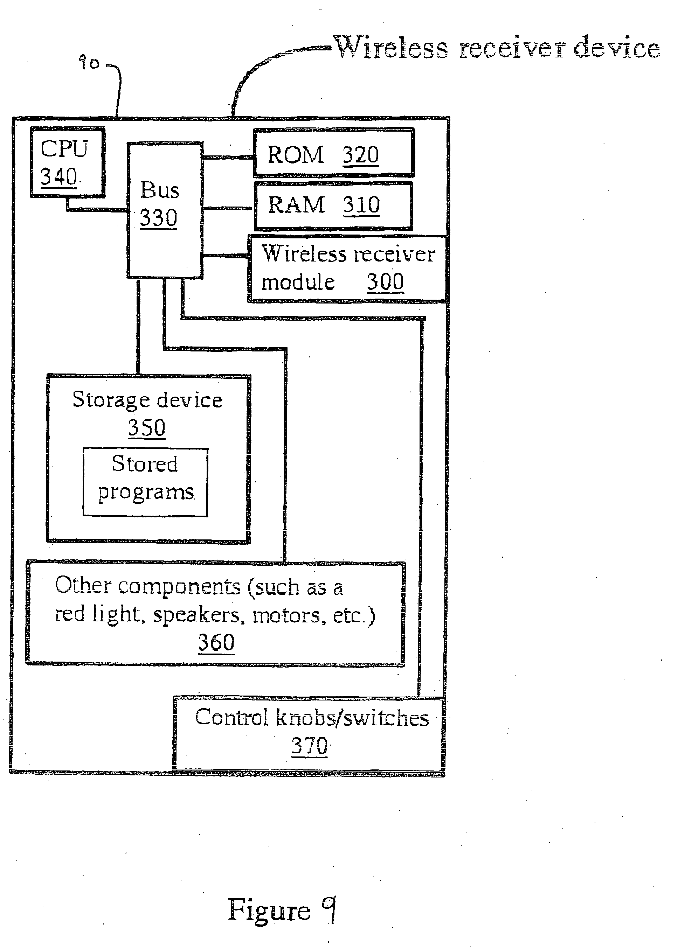

The wireless transmitter/receiver preferred embodiment is illustrated in Figures 8 and 9. The broadcast or video input signal **200** is connected to the communication port **210** on the device, for example using a standard TV coaxial cable. In the manner illustrated in Figure 7, the CPU **250** monitors the communication port, constantly looking for any data that was encoded in the broadcast stream with the base station **80** as the intended recipient. As with the device **40** of Figure 5, the ROM **230** and storage device **260** contain instructions for the CPU to follow. When the previously-encoded data is detected, that is, the header **96** of Figure 4 is encountered, in the broadcast stream by the CPU, the CPU executes additional instructions stored in ROM or the storage device to extract the data, as illustrated in Figure 7. The configuration of the external control knobs or switches **280** may then cause the CPU to modify the data before it is transmitted. That is, the control knobs or switches **280**, which may be similar to those illustrated in Figure 6, may be set to override the actions programmed into the data (fields **98** and **99** of Figure 4) or they may add additional actions, for example, instructions stored in ROM **230** for the receiving units **90** to play a soundtrack featuring music or crowd cheers.

The CPU **250** of Figure 8 will then execute additional instructions to transmit data to any receiving units within range via the wireless transmitter module **270**. As described previously, the data being sent is either the data extracted from the broadcast stream optionally modified because of the current configuration of the control knobs or switches **280**, or the data being sent is data that was stored in the ROM or the storage device. The RAM **220** allows for the temporary storage of instructions or data by the CPU. All components in Figure 8 communicate with the CPU over the bus **240.**

The wireless receiver unit **90**, as illustrated in Figure 9, contains a wireless receiver module **300.** The CPU **340** constantly monitors any data received by the wireless receiver module. When the CPU detects that the transmitting base station (Figure 8) has sent data, the CPU executes instructions stored in ROM **320** or the storage device **350** to extract the data and accordingly activate indicia or other components (such as red lights, external speakers, etc.) **360.** The current configuration of the external control knobs or switches **370** may modify (prevent or allow) the activation of each component or indicia. The random-access-memory (RAM) **310** allows for the temporary storage of instructions or data by the CPU. All components in Figure 9 communicate with the CPU over the bus **330.**

The present invention thus provides a system and method that increases the entertainment value of televised programs significantly. The system and method of the present invention are very flexible and thus permit a wide variety of indicia external to the television set or other viewing apparatus to be played or displayed for the viewer(s). Indeed, the external indicia is limited only by the imagination of the manufacturers of the devices that receive the data encoded and transmitted in accordance with the present invention.

While the preferred embodiments of the invention have been shown and described, it will be apparent to those skilled in the art that changes and modifications may be made therein without departing from the spirit of the invention, the scope of which is defined by the appended claims.

## Claims

1. A device for providing indicia in synchronization with a video program, the device comprising:
a. a communication port adapted to receive a video input signal of the video program;
b. a central processing unit in communication with the communication port, said central processing unit detecting data embedded in the video input signal;
c. indicia in communication with the central processing unit; and
d. said central processing unit activating said indicia upon detection of the data embedded in the video input signal.

2. The device of claim 1 further comprising a storage device having a stored program in communication with said central processing unit, said stored program executing upon detection of the data embedded in the video input signal by said central processing unit.

3. The device of claim 1 further comprising a read-only-memory having a stored program in communication with the central processing unit, said stored program executing upon detection of the data embedded in the video input signal by said central processing unit.

4. The device of claim 1 further comprising a random-access memory in communication with the central processing unit and allowing for temporary storage of instructions or data by the central processing unit.

5. The device of claim 1 further comprising a read-only-memory, a random-access-memory, a storage device and a bus, each of said read-only-memory, random-access-memory and storage device communicating with the central processing unit through said bus.

6. The device of claim 1 wherein said device includes a base station housing the communication port, the central processing unit and a wireless transmitter module in communication with the central processing unit and further comprising a wireless receiver unit remote from said base station and attached to said indicia so that said indicia communicates with the central processing unit of the base station by wireless transmission.

7. The device of claim 6 wherein said wireless receiver unit includes a second central processing unit.

8. The device of claim 7 wherein said wireless receiver unit includes a storage device having a stored program, said storage device in communication with said second central processing unit and executing upon detection of the data embedded in the video stream by the central processing unit of the base station.

9. The device of claim 7 wherein said wireless receiver unit includes a read-only-memory having a stored program, said read-only memory in communication with the second central processing unit and executing upon detection of the data embedded in the video stream by the central processing unit of the base station.

10. The device of claim 7 further comprising a random-access-memory housed in the wireless receiver unit and in communication with the second central processing unit and allowing for temporary storage of instructions or data by the second central processing unit.

11. The device of claim 7 further comprising a read-only-memory, a random-access-memory, a storage device and a bus housed in the wireless receiver unit, each of said read-only-memory, random-access-memory and storage device communicating with the second central processing unit through said bus.

12. The device of claim 6 wherein said wireless receiver unit includes a visual indicia.

13. The device of claim 12 wherein said indicia includes a flashing red light.

14. The device of claim 6 wherein said wireless receiver device includes an audible indicia.

15. The device of claim 14 wherein said indicia includes a speaker.

16. The device of claim 6 wherein said indicia includes a toy.

17. The device of claim 16 wherein said toy moves when said central processing unit detects the data embedded in the video input signal.

18. The device of claim 16 wherein said toy simulates speech when said central processing unit detects the data embedded in the video input signal.

19. The device of claim 1 wherein said indicia includes a visual indicia.

20. The device of claim 19 wherein said indicia includes a flashing red light.

21. The device of claim 1 wherein said indicia is audible.

22. The device of claim 21 wherein said indicia includes a speaker.

23. The device of claim 1 wherein said indicia includes a toy that moves when said central processing unit detects the data embedded in the video input signal.

24. The device of claim 1 wherein said indicia includes a toy that simulates speech when said central processing unit detects the data embedded in the video input signal.

25. A method for providing indicia in synchronization with a video program comprising the steps of:
a, embedding data in the broadcast signal of the video program;
b. transmitting the broadcast signal;
c. receiving the broadcast signal at a location remote from where the broadcast signal was transmitted;
d. detecting the data embedded in the broadcast signal; and
e. activating the indicia in response to the data embedded in the broadcast signal.

26. A system for providing indicia in synchronization with a video program, the system comprising:
a. means for embedding data into a broadcast signal of the video program;
b. means for transmitting the broadcast signal in communication with the means for embedding data into the broadcast signal;
c means for receiving the broadcast signal from the means for transmitting the broadcast signal; and
d. an external device in communication with the means for receiving the broadcast signal, said external device providing the indicia upon receipt of the data embedded in the broadcast signal.
